# EUROPEAN PATENT SPECIFICATION

(11) **EP 3 263 894 B1**
(45) Date of publication and mention of the grant of the patent: **27.07.2022**
(21) Application number: 17178135.4
(22) Date of filing: 27.06.2017
(51) Int. Cl.: F03D 80/80, F03D 80/60

(54) **SYSTEM AND METHOD FOR ADJUSTING ENVIRONMENTAL OPERATING CONDITIONS ASSOCIATED WITH HEAT GENERATING COMPONENTS OF A WIND TURBINE**
SYSTEM UND VERFAHREN ZUM EINSTELLEN VON UMGEBUNGSBETRIEBSBEDINGUNGEN IM ZUSAMMENHANG MIT WÄRMEERZEUGUNGSKOMPONENTEN EINER WINDTURBINE
SYSTÈME ET PROCÉDÉ DE RÉGLAGE DES CONDITIONS DE FONCTIONNEMENT ENVIRONNEMENTALES ASSOCIÉES À DES COMPOSANTS GÉNÉRANT DE LA CHALEUR D'UNE ÉOLIENNE

(30) Priority: 27.06.2016 US 201615193185
(43) Date of publication of application: 03.01.2018
(73) Proprietor: General Electric Company, Schenectady, NY 12345 (US)
(72) Inventor: RITTER, Allen Michael, Salem, VA Virginia 24153 (US); SCHNETZKA, Harold Robert, Greenville, SC South Carolina 29615 (US); SUTHERLAND, Steven Wade, Salem, VA Virginia 24153 (US)
(74) Representative: Zimmermann & Partner Patentanwälte mbB

(56) References cited:
- EP-A1- 2 743 502
- EP-A1- 2 808 543
- WO-A2-2008/092449
- CN-B- 101 957 624
- US-A1- 2012 133 152

## Description

The present subject matter relates generally to systems and methods for adjusting environmental operating conditions associated with heat generating components of a wind turbine and, more particularly, to a split heat exchange system for controlling the operating temperature associated with the heat generating components and/or for controlling the dew point temperature of the air surrounding such components.

Wind power is considered one of the cleanest, most environmentally friendly energy sources presently available, and wind turbines have gained increased attention in this regard. A modern wind turbine typically includes a tower, a nacelle rotatably supported on the tower, a generator housed in the nacelle, and one or more rotor blades. The rotor blades capture kinetic energy from wind using known airfoil principles, and transmit the kinetic energy through rotational energy to turn a shaft that couples the rotor blades to a gearbox, or if a gearbox is not used, directly to the generator. The generator then converts the mechanical energy to electrical energy that may be deployed to a utility grid. With the growing interest in wind generated electricity, considerable efforts have been made to develop wind turbines that are reliable and efficient.

A wind turbine typically includes numerous mechanical and electrical components that generate heat energy losses during their operation. These components include, for example, the gearbox (if provided) and generator that are typically housed in the nacelle. Other heat generating components may be housed within the tower. For example, power conversion equipment, such as a converter, a transformer and/or other power conversion components, are typically located in the tower and are utilized to feed electrical energy converted from the mechanical energy of the rotor via the generator to the grid. In addition, one or more controllers for controlling operation of the wind turbine are typically arranged within the tower.

Due to the increased performance and size of modern wind turbines, effective cooling of the above-mentioned components is becoming increasingly difficult, particularly with respect to the heat generating components within the tower. For example, it has been estimated that for a converter control system operating in a 1.5 MW turbine, about 60 kW is dissipated in heat by the converter. As such, placement of the converter within the turbine tower without adequate cooling can result in a significant temperature rise within the tower, which may be detrimental to the power conversion components, the control system components and/or other components located within the tower.

Typically, the heat generating components in the tower are arranged within a cooling airstream generated by fans. The components may include a heat sink that collects the generated heat, with the heat sink placed directly in the airstream. The heated air rises in the tower and is typically exhausted through vents near the top of the tower. The tower may include additional vents, for example in the tower entry door, to allow the passage of outside air into the lower portion of the tower. However, even with this type of arrangement, it is often difficult to feed enough external air into the tower for sufficient cooling of the tower-based components.

In addition to the issues associated with cooling the heat generating components within the tower to avoid overheating, humidity levels within the tower may often be problematic. See, for example, WO 2008/092449, CN 101957624 and US 2012/133152. For example, in some instances, power conversion equipment is shut down during the night due to a lack of wind. In such instances, if the wind turbine is located in an environment that has high humidity levels and/or that exhibits large swings in temperature from hot-to-cold during the daytime/nighttime hours, there is often a significant risk of condensation forming on the power conversion components. To avoid electrical short circuits and other associated issues, the power conversion components must be dry or otherwise free from condensation upon start-up of the power conversion equipment.

Accordingly, an improved system and method for adjusting environmental operating conditions associated with heat generating components of a wind turbine to address issues of overheating and/or condensation formation would be welcomed in the technology.

Various aspects and advantages of the invention will be set forth in part in the following description, or may be clear from the description, or may be learned through practice of the invention.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG 1 illustrates a side view of one embodiment of a wind turbine in accordance with aspects of the present subject matter;
FIG. 2 illustrates a schematic view of one embodiment of a system for adjusting environmental operating conditions associated with heat generating components located within a tower of a wind turbine, particularly illustrating a split heat exchange system provided relative to the tower such that a first heat exchanger of the system is located within the tower and a second heat exchanger of the system is located exterior to the tower;
FIG. 3 illustrates a schematic view of one embodiment of a suitable controller that may be utilized in accordance with aspects of the present subject matter to control the operation of one or more components of the disclosed system; and
FIG. 4 illustrates a flow diagram of one embodiment of a method for adjusting environmental operating conditions associated with heat generating components located within a tower of a wind turbine in accordance with aspects of the present subject matter.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims .

In general, the present subject matter is directed to systems and methods for adjusting environmental operating conditions associated with heat generating components located within a tower of a wind turbine. Specifically, in several embodiments, a split heat exchange system may be installed relative to the tower such that a first heat exchanger of the system is located within the tower and a second heat exchanger of the system is located exterior to the tower. The heat exchangers may be fluidly coupled to one another via fluid lines to allow a suitable heat exchange fluid to be cycled between the heat exchanger. As such, the split heat exchange system may implement a thermodynamic refrigeration or heat pump cycle to draw heat out of the air contained within the tower or to release heat into the tower. For example, the split heat exchange system may be operated in a cooling or first operational mode in which the interior or first heat exchanger serves an evaporator to draw heat out of the air contained within the tower, thereby allowing the tower air to be cooled. In addition, the split heat exchange system may be operated in a heating or second operational mode in which the interior or first heat exchanger serves a condenser to release heat into the air contained within the tower, thereby allowing the tower air to be heated.

By controlling the operation of the split heat exchange system, the disclosed system may adjust one or more environmental operating conditions associated with the tower-based, heat generating components of the wind turbine. For instance, in one embodiment, a component temperature(s) of one or more of the heat generating components may be monitored and compared to a predetermined temperature threshold. In the event that the component temperature(s) exceeds the predetermined temperature threshold, the operation of the split heat exchange system may be controlled such that the system is operated in its cooling or first operational mode, thereby reducing the internal air temperature within the tower and providing a cooling effect to the heat generating components.

In another embodiment, the component temperature(s) of one or more of the heat generating components may be monitored and compared to a dew point temperature of the air contained within the tower. For example, the dew point temperature may be determined based on sensor measurements provided by one or more temperature sensors, humidity sensors and/or pressure sensors. In the event that the component temperature(s) is less than the dew point temperature (or if the component temperature(s) only exceeds the dew point temperature by a given temperature differential, such as 5 degree Celsius (°C)), the operation of the split heat exchange system may be controlled such that the system is operated in a manner that adjusts the temperature differential between the component temperature(s) and the dew point temperature, thereby reducing the likelihood of condensation forming on the heat generating components. For example, if the ambient air temperature is relatively high, the split heat exchange system may be operated in its cooling or first operational mode to cool the internal tower air and, thus, reduce the relative humidity with the tower, thereby decreasing the dew point temperature relative to the component temperature(s). Alternatively, if the ambient air temperature is relatively low, the split heat exchange system may be operated in its heating or second operational mode to heat the internal tower air, thereby providing a means to increase the component temperature(s) relative to the dew point temperature.

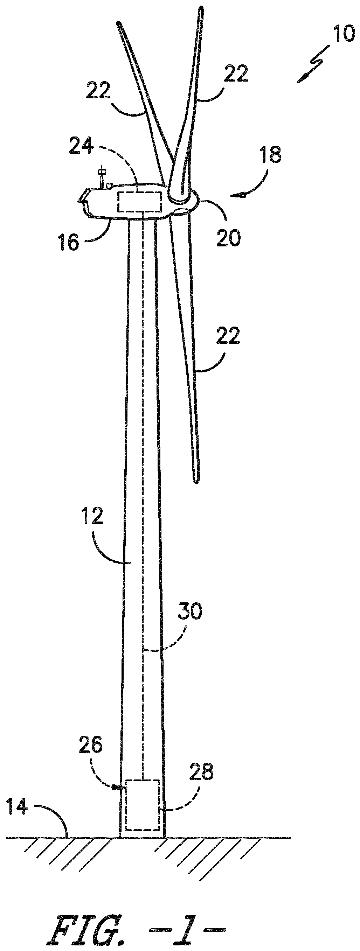

Referring now to the drawings, FIG. 1 illustrates a side view of one embodiment of a wind turbine 10. As shown, the wind turbine 10 generally includes a tower 12 extending from a support surface 14 (e.g., the ground, a concrete pad or any other suitable support surface). In addition, the wind turbine 10 may also include a nacelle 16 mounted on the tower 12 and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 positioned within the nacelle 16 to permit electrical energy to be produced.

In several embodiments, one or more heat generating components 26 of the wind turbine 10 may be located within the tower 12. For instance, as shown in FIG. 1, suitable power conversion equipment 28 may be positioned within the interior of the tower 12, such as at a lower level of the tower 12 proximal to the support surface 14. In such an embodiment, tower cables 30 may be electrically coupled between the generator 24 and the power conversion equipment 28 to allow power to be transferred between the components. As is generally understood, various other heating generating components 26 may also be located within the tower 12, such as one or more components of the wind turbine control system.

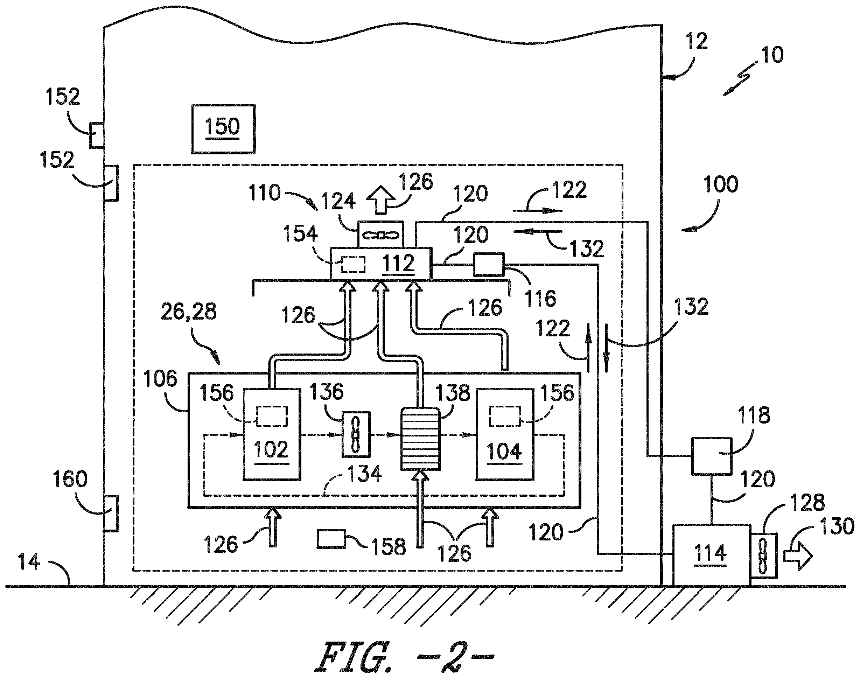

Referring now to FIG. 2, a schematic view of one embodiment of a system 100 for adjusting an environmental operating condition(s) associated with heat generating components of a wind turbine is illustrated in accordance with aspects of the present subject matter. Specifically, FIG. 2 illustrates an interior view of a lower portion of the tower 12 of the wind turbine 10 shown in FIG. 1, particularly illustrating examples of power conversion equipment 28 that may be positioned within the interior of the tower 12. However, as indicated above, any other suitable heat generating components 26 may also be located within the interior of the tower 12.

In general, the power conversion equipment 28 of the wind turbine 10 may include any number of power conversion components located within the interior of the tower 12. For example, as shown in FIG. 2, a power converter 102 and a main control cabinet (MCC) 104 may be located within an enclosure or cabinet 106 disposed within the interior of the tower 12. In one embodiment, the power converter 102 may include both a rotor side converter (not shown) and a line side converter (not shown), with the rotor and line side converters being coupled via DC link (not shown). In such an embodiment, the power converter 102 may be configured for normal operating mode in a three-phase, pulse width modulation (PWM) arrangement using suitable switching elements, such as one or more IGBTs. It should be appreciated that, although not shown, the power conversion equipment 28 of the wind turbine 10 may include any other suitable power conversion components located within the tower 12, such as switch cabinets, power distribution panels, bridge cabinets, control cabinets, converter threads and/or the like.

As indicated above, the disclosed system 100 may include suitable components for adjusting an environmental operating condition(s) associated with the tower-based, heat generating components 26 of the wind turbine 10, such as a component temperature of one or more of the power conversion components of the power conversion equipment 28 and/or a dew point temperature of the air contained within the tower. Specifically, in several embodiments, the system 100 may incorporate aspects of a split heat exchange system 110 that allows the power conversion components and other heat generating components 26 located within the tower 12 to be cooled so as maintain such components within their temperature capabilities. In addition, the split heat exchange system 110 may be controlled in a manner so as to reduce the likelihood of condensation forming on the heat generating components 26, such as prior to start-up or initiating operation of the power conversion equipment 28.

As shown in FIG. 2, the split heat exchange system 110 may include a first heat exchanger 112, a second heat exchanger 114 and one or more related system components (e.g., an expansion valve 116 and a compressor 118) to allow the split heat exchange system 110 to implement a thermodynamic refrigeration or heat pump cycle. In several embodiments, the first heat exchanger 112 may be located within the interior of the wind turbine 12, such as at a location directly above the power conversion equipment 28, while the second heat exchanger 114 may be located exterior to the tower 12, such as by being mounted to the exterior of the tower 12 or by being positioned on the support surface 14 for the wind turbine 10 or on a frame (not shown) disposed on the support surface 14. Additionally, as shown in FIG. 2, the heat exchangers 112, 114 may be coupled in a fluid circulation loop (e.g., via fluid lines 120) to allow a suitable heat exchange fluid (e.g., a refrigerant) to be circulated between the heat exchangers 110, 112 from the interior of the tower 12 to the exterior of the tower 12.

It should be appreciated that the various components of the split heat exchange system 110 may have any suitable configuration. For example, in one embodiment, the compressor 118 may correspond to a variable speed compressor. In such an embodiment, the operating speed of the compressor 118 may be adjusted, as necessary or desired, based on the requirements of the system 110. Such control may allow for the split heat exchange system 110 to be operated more efficiently, such as by reducing the energy draw of the system 110 and by facilitating enhanced control of the thermal gradient across the heat generating components 26.

In several embodiments, the split heat exchange system 110 may be configured similar to a reversible heat pump, thereby allowing the split heat exchange system 110 to be operated in both a cooling or first operational mode and a heating or second operational mode. When operating in the first operational mode, the first heat exchanger 112 may serve as an interior evaporator whereas the second heat exchanger 114 may serve as an exterior condenser, with the heat exchange fluid being cycled between the heat exchangers 112, 114 in a first cycle direction (indicated by arrows 122 in FIG. 2). In such operating mode, the heat exchange fluid may be directed into the first heat exchanger 112 (e.g., serving as the evaporator) as a cold, low pressure liquid, within which the heat exchange fluid is gasified or vaporized. As a result, the first heat exchanger 112 may serve as a source of cold air for the split heat exchange system 110. For example, as shown in FIG. 2, an interior blower or fan 124 may be positioned adjacent to the first heat exchanger 112 (e.g., directly above the heat exchanger 112) to direct or draw an airflow (indicated by arrows 126) across the coils (not shown) of the first heat exchanger 112 such that heat contained within the air 126 is absorbed by the heat exchange fluid, thereby cooling the internal tower air 126. The low pressure, gaseous heat exchange fluid exiting the first heat exchanger 112 may then be directed into the compressor 118 (e.g., located exterior of the tower 12), which is generally configured to increase the pressure of the heat exchange fluid. The high pressure, gaseous heat exchange fluid may then flow into the second heat exchanger 114 (e.g., serving as the condenser), within which the heat exchange fluid is liquefied. For example, as shown in FIG. 2, an external blower or fan 128 may be configured to direct an airflow (indicated by arrow 130 in FIG. 2) from the exterior of the tower 12 across the coils (not shown) of the second heat exchanger 114 that absorbs heat from the heat exchange fluid, thereby liquefying the heat exchange fluid within the second heat exchanger 114. The liquefied, high pressure heat exchange fluid may then be directed into the expansion valve 116 (e.g., located within the tower 12) to reduce both the pressure and the temperature of the heat exchange fluid. The cold, low pressure heat exchange fluid is then cycled back to the first heat exchanger 112 and the process is repeated.

Similarly, when operating in the second operational mode, the cycle may be reversed, with the first heat exchanger 112 serving as an interior condenser and the second heat exchanger 114 serving as an exterior evaporator and the heat exchange fluid being cycled between the heat exchangers 112, 114, in a second cycle direction (indicated by arrows 132 in FIG. 2). As such, the first heat exchanger 112 may be configured to release heat into the interior of the tower 12 as the heat exchange fluid is liquefied within the first heat exchanger 112. The cold, liquefied heat exchange fluid may then be subsequently gasified or vaporized within the second heat exchanger 114 as heat is withdrawn from the air located outside the tower 12.

By providing the split heat exchange system 110, the temperature of the air contained within the tower 12 may be adjusted, as desired, thereby providing a means for regulating the component temperatures of the heat generating components 26 located within the tower 12. For example, when the split heat exchange system 110 is operated in its first operational mode, the air 126 within the tower 12 may be drawn across the coils of the first heat exchanger 112 to reduce its air temperature. This cooled tower air 126 may then be circulated back across the heat generating components 26 to reduce their corresponding component temperatures. In addition, such cooling of the tower air 126 may serve to reduce the relative humidity within the tower 12, thereby lowering the dew point temperature of the tower air 126. Similarly, when operating in the second operational mode, the air 126 within the tower 12 may be drawn across the coils of the first heat exchanger 112 to increase its air temperature. This heated tower air 126 may then be circulated back across the heat generating components 26 to increase their corresponding component temperatures, which may be desirable in certain instances in which there is a risk of condensation forming on the heat generating components 26.

It should be appreciated that, in several embodiments, the heat generating components 26 of the wind turbine 10 may include one or more separate cooling circuits configured to provide an additional means for cooling such components. For instance, an internal cooling circuit (indicated by dashed line 134) may be provided between one or more components of the power conversion equipment 28, such as between the converter 102 and the MCC 104 for circulating air or any other fluid across such components. As shown in FIG. 2, the internal cooling circuit 134 may include a fan 136 and an air-to-air heat exchanger 138 positioned between the converter 102 and the MCC 104, with the fan 136 being configured to draw an airflow through the converter 102 and across the air-to-air heat exchanger 138 prior to such airflow being directed through the MCC 104. In such an embodiment, the tower air 126 drawn through the cabinet(s) 106 housing the power conversion components 102, 104 maybe directed through the air-to-air heat exchanger 138 to provide a means for cooling the air being circulated through the internal cooling circuit 134.

As shown in FIG. 2, the system 100 may also include a controller 150 configured to automatically control the operation of the split heat exchange system 110, including the operation of one or more of the individual components of the system 110. For example, the controller 150 may be configured to turn the split heat exchange system 110 on and off. In addition, the controller 150 may be configured to select or adjust the current operational mode for the split heat exchange system 110, such as by selecting that the split heat exchange system 110 be operated in its first operational mode or its second operational mode.

In general, the controller 150 may correspond to any suitable processor-based device, such as any suitable computing device. Thus, in several embodiments, the controller 150 may include computer-readable instructions that, when executed by one or more processors, cause the processor(s) to implement various control routines or algorithms. For instance, as will be described below, the computer-readable instructions may allow the controller 150 to control the operation of the split heat exchange system 110 based on one or more monitored heat exchange parameters, such as a temperature measurement and/or a humidity measurement provided by one or more sensors.

In several embodiments, the controller may be coupled to one or more temperature sensors 152, 154, 156 configured to monitor a temperature associated with the wind turbine 10. For example, in one embodiment, the controller may be coupled to one or more first air temperature sensors 152 configured to monitor a dry bulb temperature of the air located relative tower 12. Specifically, as shown in FIG. 2, one or more first air temperature sensors 152 may be positioned on or exterior to the tower 12 to monitor the dry bulb temperature of the air located exterior to the tower 12 and/or one or more first air temperature sensors 152 maybe positioned on or within the tower 12 to monitor the dry bulb temperature of the internal tower air 126. Additionally, in one embodiment, the controller 150 may be coupled to one or more second air temperature sensors 154 configured to monitor a wet bulb temperature of the air 126 located within the tower 12. For example, as shown in FIG. 2, one or more second air temperature sensors 154 may be located proximal to and/or within the first heat exchanger 112 to allow the sensor(s) 154 to monitor the wet bulb temperature of the air 126 passing across the coils of the first heat exchanger 112 using the condensation from the coils of the first heat exchanger 112 as a water source. Moreover, the controller 150 may also be coupled to one or more component temperature sensors 156 configured to monitor the component temperature(s) of one or more of the heat generating components 26 of the wind turbine 10. For example, as shown in FIG. 2, one or more component temperature sensors 156 may be located on or within the power converter 102 to monitor the component temperature(s) of any number of components of the power converter 102. Similarly, one or more component temperature sensors 156 may also be located on or within the MCC 104 to monitor the component temperature(s) of any components located therein.

Further, the controller 150 may also be coupled to any other suitable sensors for monitoring one or more other operating conditions of the wind turbine 10 and/or its components. For example, in one embodiment, the controller 150 may be coupled to a humidity sensor 158 configured to monitor the relative humidity of the air 126 within the tower 12. Additionally, in one embodiment, the controller 150 may be coupled to an atmospheric pressure sensor 160 configured to monitor the atmospheric air pressure. As is generally understood, the dew point temperature of air may vary based on the atmospheric air pressure. As such, the pressure sensor 160 may be used to increase the accuracy of any dew point temperature calculations made by the controller 150 based on variations in the altitude of differing wind turbine sites.

As indicated above, the controller 150 may, in several embodiments, be configured to control the operation of the split heat exchange system 110 based on the sensor measurements provided by one or more of the sensors 152, 154, 156, 158, 160. For example, in one embodiment, the controller 150 may be configured to control the operation of the split heat exchange system 110 so as to prevent overheating of the heat generating components 26. Specifically, the controller 150 may be configured to monitor a temperature associated with the heat generating components 26 (e.g., the air temperature within the tower 12 and/or the component temperature(s) of one or more of the heat generating components 26). In such an embodiment, if the monitored temperature exceeds a predetermined temperature threshold (e.g., a temperature threshold selected based on the known temperature ratings of the heat generating components), the controller 150 may activate the split heat exchange system 110 such that the system 110 is operated in its first operational mode, thereby reducing the air temperature within the tower 12 and providing a cooling effect for the heat generating components 26.

As indicated above, in addition to controlling the operation of the split heat exchange system 10 so as to prevent overheating of the heat generating components 26, the controller 150 may also be configured to control the operation of the split heat exchange system 110 to prevent condensation from forming on the heat generating components 26 (e.g., when the power conversion equipment 28 has been shut down). Specifically, in several embodiments, the controller 150 may be configured to determine the dew point temperature of the air 126 contained within the tower 12 based on the sensor measurements provided by one or more of the sensors 152, 154, 156, 158, 160. For instance, the controller 150 may determine the dew point temperature based on the wet and dry bulb temperature measurements provided by the first and second air temperature sensors 152, 154. Alternatively, the controller 150 may determine the dew point temperature based on the relative humidity measurements provided by the humidity sensor(s) 158 along with the temperature measurements provided by one or both of the air temperature sensors 152, 154. Additionally, as indicated above, the controller 150 may also take into account the atmospheric air pressure measurements provided by the pressure sensor 160 when determining the dew point temperature of the tower air 126.

Upon calculating the dew point temperature, the controller 150 may be configured to compare the dew point temperature to the component temperature(s) monitored via the component temperature sensor(s) 156. In the event that the component temperature(s) is below the dew point temperature (or is only above the dew point temperature by a predetermined temperature differential), the controller 150 may be configured to control the operation of the split heat exchange system 110 in a manner that adjusts the temperature differential between the dew point temperature and the component temperature(s) to ensure that condensation does not form on the heat generating components 26. It should be appreciated that the predetermined temperature differential may generally correspond to any suitable temperature value. However, in one embodiment, the predetermined temperature differential may correspond to a temperature value of less than 5 degrees Celsius (°C), such as a temperature value of less than 2 °C or less than 1 °C and/or any other subranges therebetween.

In several embodiments, the manner in which the controller 150 is configured to control the operation of the split heat exchange system 110 to prevent the formation of condensation on the heat generating components 26 may vary depending on the ambient air temperature within and/or exterior to the tower 12. For instance, if the ambient air temperature is relatively low, the controller 150 may control the operation of the split heat exchange system 110 such that the system 110 is operated in its second operational mode, thereby increasing the ambient air temperature within the tower 12 and providing a heating effect for the heat generating components 26. Such internal heating may increase the component temperature(s) of the heat generating components 26 relative to the dew point temperature, thereby inhibiting the formation of condensation on such components 26. For instance, the split heat exchange system 110 may be operated in its second operational mode until the component temperature(s) initially exceeds the dew point temperature or until the component temperature(s) exceeds the dew point temperature by the predetermined temperature differential.

Alternatively, if the ambient air temperature is relatively high, the controller 150 may control the operation of the split heat exchange system 110 such that the system 110 is operated in its first operational mode, thereby reducing the ambient air temperature within the tower 12 and providing a cooling effect for the heat generating components 26. Such internal cooling may also serve to reduce the relative humidity within the tower 12 and, thus, may decrease the dew point temperature relative to the component temperature(s) of the heat generating components 26, thereby inhibiting the formation of condensation on such component 26. For instance, the split heat exchange system 110 may be operated in its first operational mode until the dew point temperature initially drops below the component temperature(s) or until the dew point temperature falls below the component temperature(s) by the predetermined temperature differential.

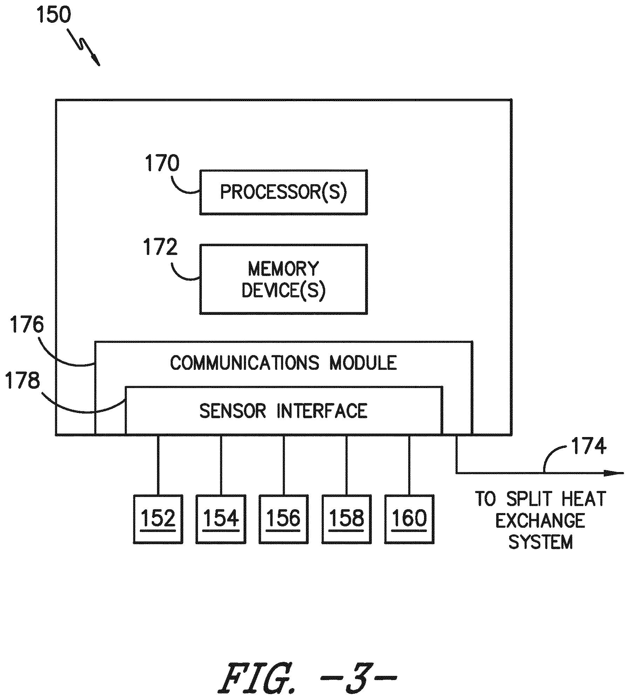

Referring now to FIG. 3, a block diagram of one embodiment of suitable components that may be included within the controller 150 of the disclosed system 100 is illustrated in accordance with aspects of the present subject matter. As shown, the controller 150 may include one or more processor(s) 170 and associated memory device(s) 172 configured to perform a variety of computer-implemented functions (e.g., performing the methods, steps, calculations and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 172 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 172 may generally be configured to store suitable computer-readable instructions that, when implemented by the processor(s) 170, configure the controller 150 to perform various functions including, but not limited to, receiving measurement signals from one or more sensors 152, 154, 156, 158, 160 and/or controlling the operation of the split heat exchange system 110. For example, the controller 150 may be configured to transmit suitable control signals (indicated by arrow 174 in FIG. 3) for controlling the operation of the split heat exchange system 110.

Additionally, the controller 150 may also include a communications interface 176 to facilitate communications between the controller 150 and the various components of the wind turbine 10, including the split heat exchange system 110. An interface can include one or more circuits, terminals, pins, contacts, conductors, or other components for sending and receiving control signals. Moreover, the controller 150 may also include a sensor interface 178 (e.g., one or more analog-to-digital converters) to permit signals transmitted from the sensors (e.g. sensors 152, 154, 156, 158, 160) to be converted into signals that may be understood and processed by the processor(s) 170.

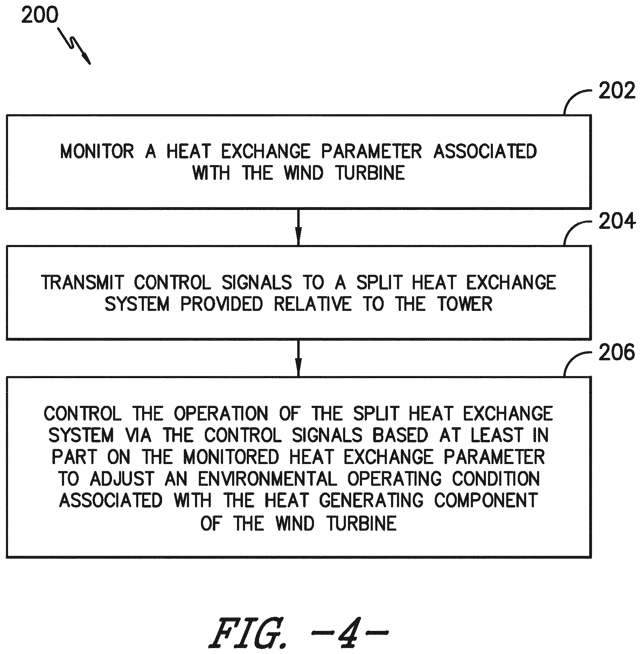

Referring now to FIG. 4, a flow diagram of one embodiment of a method 200 for adjusting an environmental operating condition(s) associated with heat generating components of a wind turbine is illustrated in accordance with aspects of the present subject matter. In general, the method 200 will be described herein with reference to the system 100 described above with reference to FIG. 2. However, it should be appreciated that aspects of the disclosed method 200 may be utilized with any other suitable system for adjusting environmental operating conditions associated with heat generating components of a wind turbine. In addition, although FIG. 4 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 4, at (202), the method 200 includes monitoring a heat exchange parameter associated with the wind turbine. For example, as indicated above, the controller 150 may be configured to monitor one or more heat exchange parameters, such as a temperature value and/or a humidity value associated with the wind turbine. Specifically, the controller 150 may be coupled to one or more temperature sensors 152, 154, 156 configured to detect one or more temperatures associated with the wind turbine, such as the dry bulb temperature of the air within or exterior to the tower 12, the wet bulb temperature of the air within the tower 12 and/or the component temperature(s) of one or more of heat generating components 26. Similarly, the controller 150 may be coupled to one or more humidity sensors 158 configured to monitor the relative humidity of the air 126 within the tower 12. As such, by receiving measurement signals from the sensors 152, 154, 156, 158, the controller 150 may be configured to monitor one or more heat exchange parameters associated with the wind turbine.

Additionally, at (204), the method 200 may include transmitting control signals to a split heat exchange system provided relative to the tower. For example, as indicated above, the split heat exchange system 110 may include a first heat exchanger 112 located within the interior of the tower 12 and a second heat exchanger 114 located exterior to the tower 112, with the first and second heat exchangers 112, 114 being fluidly coupled to one another via fluid lines 120 to allow a heat exchange fluid to be cycled between the heat exchangers 112, 114. As described above with reference to FIGS. 2 and 3, the controller 150 may be communicatively coupled to the split heat exchange system 110 to allow control signals 174 (FIG. 3) to be transmitted from the controller 150 to the split heat exchange system 110 to control its operation.

Moreover, at (206), the method 200 may include controlling the operation of the split heat exchange system via the control signals based at least in part on the monitored heat exchange parameter to adjust an environmental operating condition associated with the heat generating component. For example, as indicated above, the controller 150 may, in one embodiment, control the operation of the split heat exchange system 110 so as to prevent overheating of the tower-based, heat generating components 26 of the wind turbine 10. In such an embodiment, the controller 150 may be configured to compare a monitored temperature associated with the wind turbine (e.g., the air temperature within the tower 12 and/or the component temperature(s) of the heat generating components)) to a predetermined temperature threshold. In the event that the monitored temperature exceeds the predetermined temperature threshold, the controller 150 may transmit suitable control signals 174 to the split heat exchange system 110 such that the system 110 is operated in its first operational mode, thereby reducing the internal air temperature within the tower 12 and providing a cooling effect for the heat generating components 26.

In another embodiment, the controller 150 may control the operation of the split heat exchange system 110 so as to prevent the formation of condensation on the heat generating components 26 of the wind turbine 10. For example, as indicated above, the controller 150 may be configured to determine the dew point temperature of the air within the tower based at least in part on one or more monitored heat exchange parameters (e.g., based on the dry bulb temperature and/or the wet bulb temperature of the air and/or based on the relative humidity of the air). In such an embodiment, the controller 150 may be configured to compare the component temperature(s) of the heat generating component(s) to the dew point temperature. In the event that the component temperature(s) is less than the dew point temperature (or only exceeds the dew point temperature by a predetermined temperature differential), the controller 150 may transmit suitable control signals 174 to the split heat exchange system 110 for controlling its operation in a manner that reduces the likelihood of condensation forming on the heat generating component(s) 26. For instance, as indicated above, if the ambient air temperature is relatively low, the controller 150 may control the operation of the split heat exchange system 110 such that the system 110 is operated in its second operational mode, thereby increasing the ambient air temperature within the tower 12 and, thus, increasing the component temperature(s) of the heat generating components 26 relative to the dew point temperature. Alternatively, if the ambient air temperature is relatively high, the controller 150 may control the operation of the split heat exchange system 110 such that the system 110 is operated in its first operational mode, thereby reducing the relative humidity within the tower 12 and, thus, decreasing the dew point temperature relative to the component temperature(s) of the heat generating components 26.

## Claims

1. A wind turbine (10) comprising a tower (12) and a system (100) for adjusting environmental operating conditions associated with heat generating components (26) located within the tower (12) of the wind turbine (10), the system (100) comprising:
a heat generating component (26) located within an interior of the tower (12);
a first air temperature sensor (152) configured to monitor a dry bulb temperature of air located relative to the tower (12);
a second air temperature sensor (154) configured to monitor a wet bulb temperature of the air (126) located within the tower (12);
a pressure sensor (160) used for increasing the accuracy of dew point temperature calculations made by a controller;
a split heat exchange system (110) provided relative to the tower (12), the split heat exchange system comprising:
- a first heat exchanger (112) located within the interior of the tower (12);
- a second heat exchanger (114) located exterior to the tower, the first (112) and second heat exchangers (114) being fluidly coupled to one another by fluid lines (120) to allow a heat exchange fluid to be cycled between the first (112) and second heat exchangers (114); and
the controller (150) communicatively coupled to the sensors (152,154,160) and the split heat exchange system (110), the controller (150) being configured to control the operation of the split heat exchange system (110) based on a dew point temperature determined from the wet and dry bulb temperature measurements provided by the first and second air temperature sensors (152,154) so as to adjust an environmental operating condition associated with the heat generating component (26),
wherein the controller is configured to control the operation of the split heat exchange system such that the split heat exchange system operates in a first operational mode or a second operational mode, the operation of the split heat exchange system being controlled to perform a thermodynamic refrigeration or heat pump cycle to cool the interior of the tower in the first operational mode or to heat the interior of the tower in the second operational mode.

2. The wind turbine (10) of claim 1, wherein the controller (150) is further configured to control the operation of the split heat exchange system (110) such that an air temperature within the tower (12) is reduced when a monitored temperature exceeds 2. a predetermined temperature threshold.

3. The wind turbine (10) of claim 1 or 2, further comprising a sensor (156) configured to monitor a component temperature associated with the heat generating component (26), the controller (150) being configured to compare the monitored component temperature to the dew point temperature of the air.

4. The wind turbine (10) of claim 3, wherein the controller (150) is configured to control the operation of the split heat exchange system (110) such that the split heat exchange system (110) operates in either the first operational mode or the second operational mode when the monitored component temperature is less than the dew point temperature or within a predetermined temperature differential of the dew point temperature to adjust a temperature differential between the component temperature and the dew point temperature.

5. The wind turbine (10) of claim 4, wherein, in the first operational mode, the operation of the split heat exchange system (110) is controlled to cool the interior of the tower (12) such that the dew point temperature is reduced.

6. The wind turbine (10) of claim 4 or claim 5, wherein, in the second operational mode, the operation of the split heat exchange system (110) is controlled to heat the interior of the tower (12) such that the monitored component temperature is increased.

7. A method (200) for adjusting environmental operating conditions associated with a heat generating component (26) located within a tower (12) of a wind turbine (10) according to one of the preceding claims, the method (200) comprising the steps of :
monitoring, with a controller (150), a dry bulb temperature of air located relative to the tower, and a wet bulb temperature of the air (126) located within the tower (12);
transmitting, with the controller (150), control signals to a split heat exchange system (110) provided relative to the tower (12), the split heat exchange system (110) including a first heat exchanger (112) located within an interior of the tower (12) and a second heat exchanger (114) located exterior to the tower (12), the first (112) and second heat exchangers (114) being fluidly coupled to one another by fluid lines (120) to allow a heat exchange fluid to be cycled between the first (112) and second heat exchangers (114);
using a pressure measurement for increasing the accuracy of dew point temperature calculations; and
controlling the operation of the split heat exchange system (110) via the control signals based on a dew point temperature determined from the wet and dry bulb temperature measurements so as to adjust an environmental operating condition associated with the heat generating component (26), such that the split heat exchange system operates in a first operational mode or a second operational mode, the operation of the split heat exchange system being controlled to perform a thermodynamic refrigeration or heat pump cycle to cool the interior of the tower in the first operational mode or to heat the interior of the tower in the second operational mode.

8. The method (200) of claim 7, further comprising controlling the operation of the split heat exchange system such that an internal air temperature within the tower (12) is reduced when a monitored temperature exceeds a predetermined temperature threshold.

9. The method (200) of claim 7 or 8, further comprising:
monitoring a component temperature associated with the heat generating component (26); and
comparing the monitored component temperature to the dew point temperature of the air.

## Patentansprüche

1. Windkraftanlage (10), umfassend einen Turm (12) und ein System (100) zum Einstellen von Umgebungsbetriebsbedingungen, die mit wärmeerzeugenden Komponenten (26) verbunden sind, die sich innerhalb des Turms (12) der Windkraftanlage (10) befinden, wobei das System (100) umfasst:
eine wärmeerzeugende Komponente (26), die sich im Inneren des Turms (12) befindet;
einen ersten Lufttemperatursensor (152), der derart konfiguriert ist, dass er eine Trockenkugeltemperatur von Luft überwacht, die sich relativ zu dem Turm (12) befindet;
einen zweiten Lufttemperatursensor (154), der derart konfiguriert ist, dass er eine Feuchtkugeltemperatur der Luft (126) überwacht, die sich innerhalb des Turms (12) befindet;
einen Drucksensor (160), der zur Erhöhung der Genauigkeit der von einer Steuerung erstellten Taupunkttemperaturberechnungen verwendet wird;
ein Split-Wärmetauschersystem (110), das relative zu dem Turm (12) vorgesehen ist, wobei das Split-Wärmetauschersystem umfasst:
- einen ersten Wärmetauscher (112), der sich im Inneren des Turms (12) befindet;
- einen zweiten Wärmetauscher (114), der sich außerhalb des Turms befindet, wobei der erste (112) und der zweite Wärmetauscher (114) durch Fluidleitungen (120) miteinander verbunden sind, damit ein Wärmetauschfluid zwischen dem ersten (112) und dem zweiten Wärmetauscher (114) zirkulieren kann; und
die Steuerung (150), die kommunikativ mit den Sensoren (152, 154, 160) und dem Split-Wärmetauschersystem (110) verbunden ist, wobei die Steuerung (150) derart konfiguriert ist, dass sie die Operation des Split-Wärmetauschersystems (110) basierend auf einer Taupunkttemperatur steuert, die aus den Feucht- und Trockenkugeltemperaturmessungen bestimmt wird, die von den ersten und zweiten Lufttemperatursensoren (152, 154) bereitgestellt werden, um eine Umgebungsbetriebsbedingung einzustellen, die mit der wärmeerzeugenden Komponente (26) verbunden ist,
wobei die Steuerung derart konfiguriert ist, dass sie den Betrieb des Split-Wärmetauschersystems so steuert, dass das Split-Wärmetauschersystem in einem ersten Betriebsmodus oder einem zweiten Betriebsmodus betrieben wird, wobei der Betrieb des Split-Wärmetauschersystems so gesteuert wird, dass es einen thermodynamischen Kälte- oder Wärmepumpenzyklus durchführt, um das Innere des Turms im ersten Betriebsmodus zu kühlen oder das Innere des Turms im zweiten Betriebsmodus zu erwärmen.

2. Windkraftanlage (10) nach Anspruch 1, wobei die Steuerung (150) ferner derart konfiguriert ist, dass sie den Betrieb des Split-Wärmetauschersystems (110) so steuert, dass eine Lufttemperatur innerhalb des Turms (12) reduziert wird, wenn eine überwachte Temperatur einen vorbestimmten Temperaturschwellenwert überschreitet.

3. Windkraftanlage (10) nach Anspruch 1 oder 2, ferner umfassend einen Sensor (156), der derart konfiguriert ist, dass er eine mit der wärmeerzeugenden Komponente (26) verbundene Komponententemperatur überwacht, wobei die Steuerung (150) so konfiguriert ist, dass sie die überwachte Komponententemperatur mit der Taupunkttemperatur der Luft vergleicht.

4. Windkraftanlage (10) nach Anspruch 3, wobei die Steuerung (150) derart konfiguriert ist, dass sie die Operation des Split-Wärmetauschersystems (110) derart steuert, dass das Split-Wärmetauschersystem (110) entweder in der ersten Betriebsart oder in der zweiten Betriebsart betrieben wird, wenn die überwachte Komponententemperatur niedriger als die Taupunkttemperatur oder innerhalb einer vorbestimmten Temperaturdifferenz zur Taupunkttemperatur ist, um eine Temperaturdifferenz zwischen der Komponententemperatur und der Taupunkttemperatur einzustellen.

5. Windkraftanlage (10) nach Anspruch 4, wobei in dem ersten Betriebsmodus der Betrieb des Split-Wärmetauschersystems (110) gesteuert wird, um das Innere des Turms (12) zu kühlen, so dass die Taupunkttemperatur reduziert wird.

6. Windkraftanlage (10) nach Anspruch 4 oder Anspruch 5, wobei in dem zweiten Betriebsmodus der Betrieb des Split-Wärmetauschersystems (110) so gesteuert wird, dass das Innere des Turms (12) erwärmt wird, so dass die überwachte Komponententemperatur erhöht wird.

7. Verfahren (200) zum Einstellen von Umgebungsbetriebsbedingungen, die mit einer wärmeerzeugenden Komponente (26) verbunden sind, die sich in einem Turm (12) einer Windkraftanlage (10) nach einem der vorhergehenden Ansprüche befindet, wobei das Verfahren (200) die Schritte umfasst:
Überwachen, mit einer Steuerung (150), einer Trockenkugeltemperatur von Luft, die sich relativ zu dem Turm befindet, und einer Feuchtkugeltemperatur der Luft (126), die sich innerhalb des Turms (12) befindet;
Übertragen von Steuersignalen mit der Steuerung (150) an ein Split-Wärmetauschersystem (110), das in Bezug auf den Turm (12) vorgesehen ist, wobei das Split-Wärmetauschersystem (110) einen ersten Wärmetauscher (112), der sich im Inneren des Turms (12) befindet, und einen zweiten Wärmetauscher (114), der sich außerhalb des Turms (12) befindet, umfasst, wobei der erste (112) und der zweite Wärmetauscher (114) durch Fluidleitungen (120) miteinander verbunden sind, um zu ermöglichen, dass ein Wärmetauschfluid zwischen dem ersten (112) und dem zweiten Wärmetauscher (114) zirkuliert;
Verwendung einer Druckmessung zur Erhöhung der Genauigkeit der Taupunkttemperaturberechnungen; und
Steuern des Betriebs des Split-Wärmetauschersystems (110) mittels der Steuersignale basierend auf einer Taupunkttemperatur, die aus den Feucht- und Trockenkugeltemperaturmessungen bestimmt wird, um eine Umgebungsbetriebsbedingung einzustellen, die mit der wärmeerzeugenden Komponente (26) verbunden ist, so dass das Split-Wärmetauschersystem in einem ersten Betriebsmodus oder einem zweiten Betriebsmodus betrieben wird, wobei der Betrieb des Split-Wärmetauschersystems gesteuert wird, um einen thermodynamischen Kühl- oder Wärmepumpenzyklus durchzuführen, um das Innere des Turms in dem ersten Betriebsmodus zu kühlen oder das Innere des Turms in dem zweiten Betriebsmodus zu erwärmen.

8. Verfahren (200) nach Anspruch 7 ferner umfassend Steuern des Betreibens des Split-Wärmetauschersystems, so dass eine innere Lufttemperatur innerhalb des Turms (12) reduziert wird, wenn eine überwachte Temperatur eine vorbestimmte Temperaturschwelle überschreitet.

9. Verfahren (200) nach Anspruch 7 oder 8, ferner umfassend:
Überwachen einer Komponententemperatur, die mit der wärmeerzeugenden Komponente (26) verbunden ist; und
Vergleichen der überwachten Komponententemperatur mit der Taupunkttemperatur der Luft.

## Revendications

1. Turbine éolienne (10) comprenant un mât (12) et un système (100) pour ajuster des conditions de fonctionnement environnementales associées à des composants de génération de chaleur (26) situés au sein du mât (12) de la turbine éolienne (10), le système (100) comprenant :
un composant de génération de chaleur (26) situé au sein d'un intérieur du mât (12) ;
un premier capteur de température d'air (152) configuré pour surveiller une température de bulbe sec d'air situé par rapport au mât (12) ;
un second capteur de température d'air (154) configuré pour surveiller une température de bulbe humide de l'air (126) situé au sein du mât (12) ;
un capteur de pression (160) utilisé pour augmenter la précision de calculs de température de point de rosée réalisés par un dispositif de commande ;
un système d'échange de chaleur divisé (110) fourni par rapport au mât (12), le système d'échange de chaleur divisé comprenant :
- un premier échangeur de chaleur (112) situé au sein de l'intérieur du mât (12) ;
- un second échangeur de chaleur (114) situé à l'extérieur du mât, les premier (112) et second échangeurs de chaleur (114) étant couplés fluidiquement l'un à l'autre par des lignes de fluide (120) pour permettre à un fluide d'échange de chaleur d'être cyclé entre les premier (112) et second échangeurs de chaleur (114) ; et
le dispositif de commande (150) couplé de manière communicative aux capteurs (152, 154, 160) et au système d'échange de chaleur divisé (110), le dispositif de commande (150) étant configuré pour commander le fonctionnement du système d'échange de chaleur divisé (110) en fonction d'une température de point de rosée déterminée à partir des mesures de température de bulbe humide et sec fournies par les premier et second capteurs de température d'air (152, 154) de manière à ajuster une condition de fonctionnement environnementale associée au composant de génération de chaleur (26),
dans laquelle le dispositif de commande est configuré pour commander le fonctionnement du système d'échange de chaleur divisé de telle sorte que le système d'échange de chaleur divisé fonctionne dans un premier mode de fonctionnement ou un second mode de fonctionnement, le fonctionnement du système d'échange de chaleur divisé étant commandé pour effectuer un cycle de réfrigération thermodynamique ou de pompe à chaleur pour refroidir l'intérieur du mât dans le premier mode de fonctionnement ou pour chauffer l'intérieur du mât dans le second mode de fonctionnement.

2. Turbine éolienne (10) selon la revendication 1, dans laquelle le dispositif de commande (150) est en outre configuré pour commander le fonctionnement du système d'échange de chaleur divisé (110) de telle sorte qu'une température d'air au sein du mât (12) est réduite lorsqu'une température surveillée dépasse un seuil de température prédéterminé.

3. Turbine éolienne (10) selon la revendication 1 ou 2, comprenant en outre un capteur (156) configuré pour surveiller une température de composant associée au composant de génération de chaleur (26), le dispositif de commande (150) étant configuré pour comparer la température de composant surveillée à la température de point de rosée de l'air.

4. Turbine éolienne (10) selon la revendication 3, dans laquelle le dispositif de commande (150) est configuré pour commander le fonctionnement du système d'échange de chaleur divisé (110) de telle sorte que le système d'échange de chaleur divisé (110) fonctionne soit dans le premier mode de fonctionnement soit dans le second mode de fonctionnement lorsque la température de composant surveillée est inférieure à la température de point de rosée ou au sein d'un différentiel de température prédéterminé de la température de point de rosée pour ajuster un différentiel de température entre la température de composant et la température de point de rosée.

5. Turbine éolienne (10) selon la revendication 4, dans laquelle, dans le premier mode de fonctionnement, le fonctionnement du système d'échange de chaleur divisé (110) est commandé pour refroidir l'intérieur du mât (12) de telle sorte que la température de point de rosée est réduite.

6. Turbine éolienne (10) selon la revendication 4 ou la revendication 5, dans laquelle, dans le second mode de fonctionnement, le fonctionnement du système d'échange de chaleur divisé (110) est commandé pour chauffer l'intérieur du mât (12) de telle sorte que la température de composant surveillée est augmentée.

7. Procédé (200) pour ajuster des conditions de fonctionnement environnementales associées à un composant de génération de chaleur (26) situé au sein d'un mât (12) d'une turbine éolienne (10) selon l'une des revendications précédentes, le procédé (200) comprenant les étapes consistant à :
surveiller, avec un dispositif de commande (150), une température de bulbe sec d'air situé par rapport au mât, et une température de bulbe humide de l'air (126) situé au sein du mât (12) ;
transmettre, avec le dispositif de commande (150), des signaux de commande à un système d'échange de chaleur divisé (110) fourni par rapport au mât (12), le système d'échange de chaleur divisé (110) incluant un premier échangeur de chaleur (112) situé au sein d'un intérieur du mât (12) et un second échangeur de chaleur (114) situé à l'extérieur du mât (12), les premier (112) et second échangeurs de chaleur (114) étant couplés fluidiquement l'un à l'autre par des lignes de fluide (120) pour permettre à un fluide d'échange de chaleur d'être cyclé entre les premier (112) et second échangeurs de chaleur (114) ;
utiliser une mesure de pression pour augmenter la précision de calculs de température de point de rosée ; et
commander le fonctionnement du système d'échange de chaleur divisé (110) par le biais des signaux de commande en fonction d'une température de point de rosée déterminée à partir des mesures de température de bulbe humide et sec de manière à ajuster une condition de fonctionnement environnementale associée au composant de génération de chaleur (26), de telle sorte que le système d'échange de chaleur divisé fonctionne dans un premier mode de fonctionnement ou un second mode de fonctionnement, le fonctionnement du système d'échange de chaleur divisé étant commandé pour effectuer un cycle de réfrigération thermodynamique ou de pompe à chaleur pour refroidir l'intérieur du mât dans le premier mode de fonctionnement ou pour chauffer l'intérieur du mât dans le second mode de fonctionnement.

8. Procédé (200) selon la revendication 7, comprenant en outre la commande du fonctionnement du système d'échange de chaleur divisé de telle sorte qu'une température d'air interne au sein du mât (12) est réduite lorsqu'une température surveillée dépasse un seuil de température prédéterminé.

9. Procédé (200) selon la revendication 7 ou 8, comprenant en outre :
surveiller une température de composant associée au composant de génération de chaleur (26) ; et
comparer la température de composant surveillée à la température de point de rosée de l'air.
